Europäisches Patentamt

European Patent Office

Office européen des brevets

(11) Veröffentlichungsnummer: **0 370 295**
**A1**

## (12) EUROPÄISCHE PATENTANMELDUNG

(21) Anmeldenummer: 89120469.5

(22) Anmeldetag: 06.11.89

(51) Int. Cl.5: **B23B 51/04, G01N 1/08**

(30) Priorität: **19.11.88 DE 3839212**

(43) Veröffentlichungstag der Anmeldung:
**30.05.90 Patentblatt 90/22**

(84) Benannte Vertragsstaaten:
**CH DE FR GB LI SE**

(71) Anmelder: **ASEA BROWN BOVERI AG**
**Haselstrasse**
**CH-5401 Baden(CH)**

(72) Erfinder: **Garbe, Heyno, Dr.**
**Im Rüteli 7**
**CH-5400 Baden(CH)**
Erfinder: **Königstein, Dietrich, Dr.**
**Oberriedenstrasse 61**
**CH-5412 Gebenstorf(CH)**

(54) **Verfahren zur Herstellung eines zylinderförmigen Körpers und Vorrichtung zur Durchführung des Verfahrens.**

(57) Mit diesem Verfahren werden insbesondere Probenkörper von Absorbermaterial gewonnen.

Bei diesem Verfahren soll die Beschaffenheit der entnommenen Körper nicht verfälscht werden. Eine Vorrichtung, welche die rationelle Durchführung dieses Verfahrens erlaubt, soll angegeben werden. Dies wird dadurch erreicht, dass aus dem Material zuerst eine planparallele Platte (1) ausgeschnitten wird, welche mit einer Führungsöffnung (4a) versehen wird. In die Führungsöffnung (4a) wird ein Führungsteil (5) eingesetzt, welches konzentrisch zu dieser ein Schneidelement (9) führt, welches einen hülsenförmige Körper (13) abtrennt. Dieser Körper (13) wird dann in eine Messvorrichtung eingebracht.

FIG.1

EP 0 370 295 A1

## Verfahren zur Herstellung eines zylinderförmigen Körpers und Vorrichtung zur Durchführung des Verfahrens

Die Erfindung bezieht sich auf ein Verfahren zur Herstellung eines zylinderförmigen Körpers aus einem vergleichsweise leicht deformierbaren Material, insbesondere aus Absorbermaterial, und auf eine Vorrichtung zur Durchführung dieses Verfahrens.

Die Entnahme von Materialproben aus Absorbermaterial ist schwierig, da dieses Material in der Regel eine schwammartige Struktur aufweist und mechanisch nur vergleichsweise schwach belastet werden kann. Bei der Entnahme von Proben, z.B. durch Ausstechen, wird das Material der Proben häufig deformiert und infolge der mechanischen Belastung verdichtet. Werden Proben mit Hilfe von spanabhebenden Arbeitsvorgängen gewonnen, so gelangen häufig Späne in das Material der Probe und verfälschen seine Dichte. Die elektrischen Eigenschaften derartig gewonnener Proben weichen von denen des Ausgangsmaterials ab.

Hier will die Erfindung Abhilfe schaffen. Die Erfindung, wie sie in den Ansprüchen gekennzeichnet ist, löst die Aufgabe, ein Verfahren zur Herstellung eines zylinderförmigen Körpers aus einem vergleichsweise leicht deformierbaren Material, insbesondere Absorbermaterial, anzugeben, bei welchem die Beschaffenheit des Körpers nicht verfälscht wird, und eine Vorrichtung zu zeigen, mit deren Hilfe das Verfahren rationell durchgeführt werden kann.

Die durch die Erfindung erreichten Vorteile sind im wesentlichen darin zu sehen, dass auch aus vergleichsweise weichen, schwammartig ausgebildeten Materialien repräsentative Probenkörper entnommen werden können, ohne dass das Gefüge der Körper während der Herstellung unzulässig beansprucht wird und ohne dass deren Dichte verfälscht wird. Ferner wirkt sich vorteilhaft aus, dass diese Körper so genau hergestellt werden können, dass sie den Hohlraum einer koaxial aufgebauten Messeinrichtung exakt ausfüllen, sodass hochpräzise Messungen an ihnen ausgeführt werden können.

Die weiteren Ausgestaltungen der Erfindung sind Gegenstände der abhängigen Ansprüche.

Die Erfindung, ihre Weiterbildung und die damit erzielbaren Vorteile werden nachstehend anhand der Zeichnungen, welche lediglich eine Ausführungsmöglichkeit darstellen, näher erläutert.

Es zeigen:

Fig. 1 eine erste Ausgestaltung der erfindungsgemässen Vorrichtung, und

Fig. 2 eine Skizze der Entnahme des Probenkörpers.

Bei allen Figuren sind gleich wirkende Elemente mit gleichen Bezugszeichen versehen.

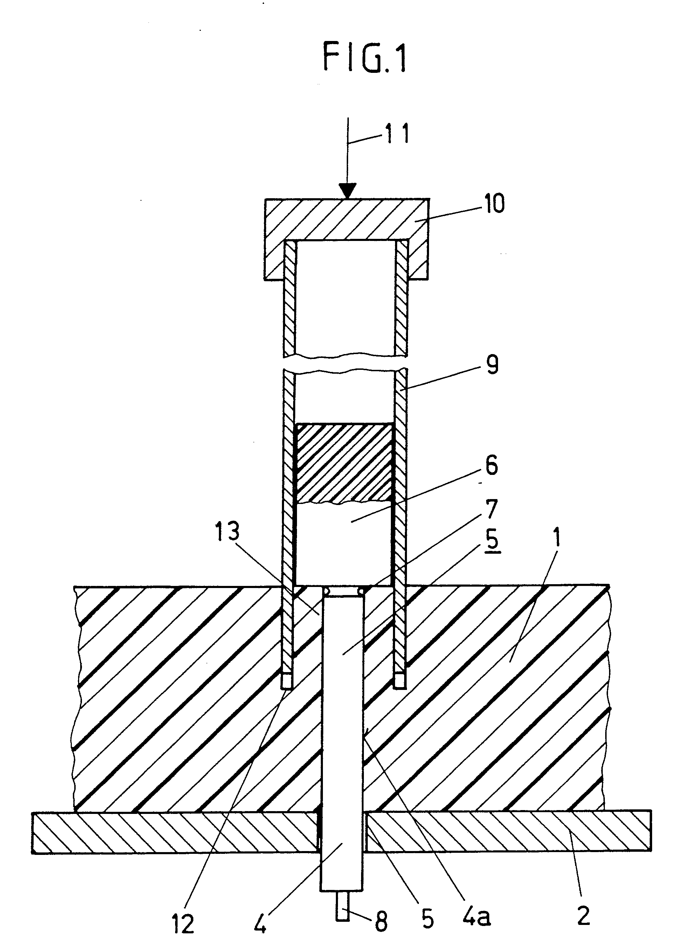

Fig. 1 zeigt eine erfindungsgemässe Vorrichtung zur Herstellung von zylindrischen Probenkörpern aus Absorbermaterial. Ein Stück einer planparallelen Platte 1 aus Absorbermaterial, welche beispielsweise mittels einer Kreis- oder einer Bandsäge hergestellt wurde, liegt auf einer Auflage 2. Diese Auflage 2 kann als Teil eines im übrigen nicht dargestellten Bohrwerkes betrachtet werden. Die Auflage 2 weist eine Bohrung 3 auf, welche von einem zylindrischen Schaft 4 eines Führungsteils 5 durchdrungen wird. Der Schaft 4 durchdringt gleichzeitig eine Führungsöffnung 4a, welche senkrecht zur Oberfläche der Platte 1 verläuft, und positioniert diese Platte 1. Das Führungsteil 5 besteht aus dem Schaft 4 und einem Kopfteil 6, welches einen grösseren Durchmesser als der Schaft 4 aufweist. Das Führungsteil 5 kann ein- oder mehrstückig ausgebildet sein. Das Kopfteil 6 weist eine Schulter 7 auf, die sich auf die Platte 1 abstützt. Der Schaft 4 weist unten einen Gewindebolzen 8 auf. Das Kopfteil 6 erstreckt sich in axialer Richtung nach oben, wobei die axiale Erstreckung mindestens das 1,5-fache seines Durchmessers beträgt, sodass eine gute Führung eines rohrförmig ausgebildeten Schneidelementes 9 gewährleistet ist, welches das Führungsteil 5 konzentrisch umgibt. Das Schneidelement 9 wird in einer Halterung 10 gehalten, die mit dem nicht dargestellten Bohrwerk in Wirkverbindung steht. Ein Pfeil 11 deutet an, dass das Schneidelement 9 samt Halterung 10 in axialer Richtung durch einen einstellbaren Vorschub nach unten bewegt werden kann. Dabei rotiert das Schneidelement 9 gleichzeitig und wirkt mit seiner mit Zähnen versehenen Stirnseite 12 auf die Platte 1 ein und trennt einen hülsenförmig ausgebildeten Körper 13 vom Material der Platte 1 ab.

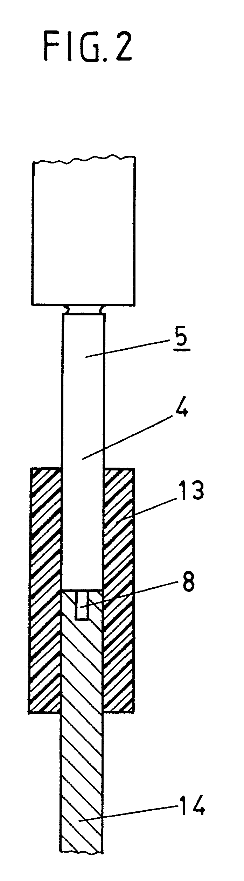

Der Körper 13 wird nun, nach dem Wegfahren des Schneidelements 9, gemeinsam mit dem Führungsteil 5 entnommen. Wie in Fig 2 gezeigt, wird dann eine zylindrisch ausgebildete Leiterbahn 14 auf den Gewindebolzen 8 geschraubt und stossfrei mit dem Führungsteil 5 verbunden. Der Körper 13 wird dann vom Schaft 4 des Führungsteils 5 auf die Leiterbahn 14 geschoben und nach dem Lösen der Schraubverbindung wird der von der Leiterbahn 14 getragene Körper 13 in eine Messvorrichtung eingebracht. Die Leiterbahn 14 ist ein Bestandteil dieser Messvorrichtung.

Der Kopfteil 6 des Führungsteils 5 dient als Führung für das ihn umfassende Schneidelement 9. Die Materialpaarung muss hier so gewählt werden, dass kein Abrieb entstehen kann, der nach unten fällt und das Material des Probenkörpers verfälschen kann. Das Schneidelement 9 ist vorzugsweise aus gehärtetem Stahl gefertigt, das Kopfteil 6 dagegen vorteilhaft aus weicherem Material. Das Kopfteil 6 kann aus weicherem Metall wie beispielsweise ungehärteten Stahlsorten, Messing oder Bronze gefertigt werden, es kann aber auch aus Kunststoff, insbesondere Teflon, bestehen. Das gesamte Führungsteil 5 kann einstückig aus dem betreffenden Material gefertigt sein, es kann aber auch aus verschiedenen Materialien zusammengesetzt werden. Es würde aber auch genügen, wenn der Kopfteil 6 des Führungsteils 5 in dem Bereich, in dem er führt, beispielsweise mit Teflon beschichtet wäre. Ferner ist es sinnvoll, die Schneidezähne auf der Stirnseite 12 des Schneidelements 9 so anzuschleifen, dass abgetragene Materialpartikel von ihnen in radialer Richtung nach aussen ausgetragen werden. Auf diese Art wird vermieden, dass sich diese Materialpartikel an den Körper 13 anlagern und dessen Dichte bzw. Gefüge verfälschen.

Das Bohrwerk weist eine einstellbare Verschubgeschwindigkeit auf, da durch eine gleichmässige Schnittgeschwindigkeit eine homogene Oberfläche des Probenkörpers erzielt wird. Vorschubgeschwindigkeiten im Bereich 5 mm pro Sekunde bis 0,1 mm pro Sekunde haben sich als vorteilhaft erwiesen. Bei Plattendicken um 10 cm lässt sich so eine rationelle und sichere Entnahme von Probenkörpern durchführen.

Ferner erweist es sich als zweckmässig, zwischen die Auflage 2, wenn diese z.B. aus Stahl gefertigt ist, und die Platte 1 eine Zwischenlage einzubringen, um die Stirnseite 12 des Schneidelements 9 zu schonen. Die Zwischenlage wird deshalb vorteilhaft aus einem weichen und trotzdem formbeständigen Material gefertigt, wie z.B. Gummi.

Bei dem Verfahren zur Herstellung von zylindrischen Probenkörpern, insbesondere aus Absorbermaterial, wird zuerst eine planparallele Platte 1 aus dem betreffenden Material herausgeschnitten. In diese Platte 1 wird anschliessend, senkrecht zu den planparallelen Oberflächen, mit einem Spiralbohrer eine Führungsöffnung 4a gebohrt. In diese Führungsöffnung 4a wird der Schaft 4 eines zylindrisch augebildeten Führungsteils 5 genau passend eingebracht. Das Führungsteil 5 weist zudem ein Kopfteil 6 auf, welches ein rohrförmig ausgebildetes, mit seiner Stirnseite 12 schneidendes Schneidelement 9 innen führt. Das Schneidelement 9 schneidet genau konzentrisch zur Führungsöffnung 4a einen hülsenförmig ausgebildeten Körper 13 aus der Platte 1 heraus. Bei diesem Abtrennvorgang wird das Material des Körpers 13 weder deformiert noch verdichtet. Der Körper verbleibt zunächst auf dem Führungsteil 5. Das Führungsteil wird entnommen und stossfrei mit einer Leiterbahn 14 verbunden. Danach wird der Körper 13 auf die Leiterbahn 14 geschoben und das Führungsteil 5 wird abgetrennt. Der von der Leiterbahn 14 getragene Körper 13 wird zusammen mit dieser in eine koaxial ausgebildete Messvorrichtung eingebracht, in welcher u.a. die Permeabilität und die Dielektrizitätskonstante des Probenkörpers bestimmt werden.

Das Material der Platte 1 ist vergleichsweise weich und deformiert sich bei vergleichsweise geringer mechanischer Belastung. Bei einer Entnahme eines Probenkörpers muss jedoch darauf geachtet werden, dass das Material des Körpers 13 nicht verfälscht wird im Hinblick auf Dichte und Form. Das Schneidelement 9 wird daher sehr vorteilhaft mit einer vergleichsweise langsamen und konstanten Vorschubgeschwindigkeit auf die Platte 1 einwirken, sodass keine mechanischen Deformationen des Materials auftreten. Es zeigte sich, dass Vorschubgeschwindigkeiten im Bereich von 5 mm pro Sekunde bis 0,1 mm pro Sekunde günstig sind. Insbesondere eine Vorschubgeschwindigkeit von 1 mm pro Sekunde erwies sich als vorteilhaft.

## Ansprüche

1. Verfahren zur Herstellung eines zylinderförmigen Körpers (13) aus einem vergleichsweise leicht deformierbaren Material, insbesondere Absorbermaterial, dadurch gekennzeichnet,
- dass aus dem Material zuerst eine planparallele Platte (1) ausgeschnitten wird,
- dass in diese planparallele Platte (1) danach eine durchgehende Führungsöffnung (4a) senkrecht zur Oberfläche eingebracht wird,
- dass in die Führungsöffnung (4a) ein passendes Führungsteil (5) eingesetzt wird, und
- dass ein durch das Führungsteil (4a) geführtes, rohrförmiges Schneidelement (9) aus der Platte (1) konzentrisch zur Führungsöffnung (4a) den Körper (13) abtrennt.

2. Verfahren nach Anspruch 1, dadurch gekennzeichnet,
- dass das Führungsteil (5) stossfrei mit einer Leiterbahn (14) verbunden wird,
- dass anschliessend das Führungsteil (5) aus dem Körper (13) ausgebracht und gleichzeitig die Leiterbahn (14) in den Körper (13) eingezogen wird, und
- dass nach der Trennung von Führungsteil (5) und Leiterbahn (14) der von der Leiterbahn (14) getragene Körper (13) in eine Messvorrichtung eingebracht wird.

3. Verfahren nach Anspruch 1, dadurch gekennzeichnet, dass die Führungsöffnung (4a) mittels eines Spiralbohrers eingebracht wird.

4. Verfahren nach Anspruch 3, dadurch gekennzeichnet, dass sowohl der Spiralbohrer als auch das Schneidelement (9) mit konstanter Vorschubgeschwindigkeit im Bereich von 5 mm pro Sekunde bis 0,1 mm pro Sekunde in die Platte (1) eindringen.

5. Vorrichtung zur Durchführung des Verfahrens nach Anspruch 1, mit einem Bohrwerk und mit einer Auflage (2) für eine planparallele Platte (1) aus dem vergleichsweise leicht deformierbaren Material, dadurch gekennzeichnet,
- dass sie ein zylindrisch ausgebildetes Führungsteil (5) mit einem Schaft (4) und einem Kopfteil (6) aufweist,
- dass das Kopfteil (6) von einem mit dem Bohrwerk in Wirkverbindung stehenden, rohrförmig ausgebildeten Schneidelement (9) konzentrisch zum Schaft (4) umschlossen ist,
- dass der Schaft (4) die planparallele Platte (1) positioniert und diese Platte (1) und die Auflage (2) durchdringt, und
- dass die Stirnseite (12) des Schneidelements (9) als Schneidefläche ausgebildet ist.

6. Vorrichtung gemäss Anspruch 5, dadurch gekennzeichnet, dass das Führungsteil (5) aus Metall ausgebildet ist.

7. Vorrichtung gemäss Anspruch 5, dadurch gekennzeichnet, dass zumindest ein Teil des Führungsteils (5) aus Kunststoff, insbesondere Teflon, ausgebildet ist.

8. Vorrichtung gemäss Anspruch 5, dadurch gekennzeichnet,
- dass das Schneidelement (9) aus gehärtetem Stahl ausgebildet ist, und
- dass Schneidezähne auf der Stirnseite (12) des Schneidelements (9) so angeschliffen ist, dass abgetra gene Materialpartikel in radialer Richtung ausgetragen werden.

9. Vorrichtung gemäss Anspruch 5, dadurch gekennzeichnet, dass das Bohrwerk einstellbare Vorschubgeschwindigkeiten zumindest im Bereich von 5 mm pro Sekunde bis 0,1 mm pro Sekunde aufweist.

10. Vorrichtung gemäss Anspruch 5, dadurch gekennzeichnet, dass die Auflage (2) mit einer Zwischenlage versehen ist.

# FIG.1

# FIG.2

5

4

13

8

14

# EUROPÄISCHER RECHERCHENBERICHT

Nummer der Anmeldung

EP 89 12 0469

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-4 755 088 (J. VAJDA) <br> * Spalte 3, Zeilen 11-36; Figuren 8-10 * <br> --- | 1-3,5 | B 23 B 51/04 <br> G 01 N 1/08 |
| A | US-A-2 306 807 (S.B. HULVEY et al.) <br> * Spalte 2, Zeilen 5-10; Figuren 1,2 * <br> --- | 1,3,5 | |
| A | DE-C- 883 876 (K. PANNKOKE) <br> * Ansprüche 1,5; Figur 1 * <br> --- | 1,5,10 | |
| A | FR-A- 703 160 (R.-G. GUILLERY) <br> * Seite 1, Zeilen 1-6; Figur 1 * <br> --- | 1,5 | |
| A | US-A- 417 756 (G.R. HARRIS) <br> * Spalte 11, Zeilen 14-20 * <br> ----- | 7 | |

|  |
|---|
| **RECHERCHIERTE SACHGEBIETE (Int. Cl.5)** |
| B 28 D <br> B 23 B <br> B 25 H <br> G 01 N |

Der vorliegende Recherchenbericht wurde für alle Patentansprüche erstellt

| Recherchenort | Abschlußdatum der Recherche | Prüfer |
|---|---|---|
| DEN HAAG | 21-02-1990 | MOET H.J.K. |